# EUROPEAN PATENT APPLICATION

(11) **EP 3 557 511 A1**
(43) Date of publication of application: **23.10.2019**
(21) Application number: 18167666.9
(22) Date of filing: 17.04.2018
(51) Int. Cl.: G06Q 20/02, G06Q 20/38, G06Q 20/40

(54) **CRYPTO-ASSET WALLET WITH OFF-CHAIN SECURITY POLICY CHECK**

(71) Applicant: Metaco SA, 1007 Lausanne (CH)
(72) Inventor: Treccani, Adrien, 1820 Territet (CH); Kobel, Vincent, 1219 Aïre (CH); Chevalier, Alexis, 74500 Evian Les Bains (FR)
(74) Representative: P&TS SA (AG, Ltd.)

(57) **Abstract**

Method for validating a transaction of a crypto-asset, the method is executed by a processing apparatus (P) and at least one hardware security module (HSM), wherein the method defines N first level keys and T second level keys, wherein each first level key comprises a public first level key and a private first level key (1), wherein each second level key comprises a public second level key and a private second level key (2), wherein the T private second level keys are stored in the at least one hardware security module (HSM), wherein the method comprises the steps of: providing, in the processing apparatus, transaction data (D) comprising transaction details relating to the transaction of a crypto-asset of a distributed ledger (L), the N public first level keys and the T public second level keys; receiving a minimum number M of first level signatures (A) from M signatories; checking, in the at least one hardware security module (HSM), if the transaction details fulfil at least one security policy, if the transaction details fulfil the at least one security policy, creating, in the at least one hardware security module, a minimum number S of second level signatures (B) based on S of the T private second level keys; and sending, by the processing apparatus, the transaction data (D), the M first level signatures (A) and the S second level signatures (B) to a node of the distributed ledger (L) to publish the transaction of the crypto-asset in the distributed ledger (L).

## Description

### Field of the invention

The present invention concerns a crypto-asset wallet with an off-chain check of a security policy.

### Description of related art

Cryptocurrencies work on the basis of distributed ledgers. The distributed ledger of a cryptocurrency stores the existing amount of cryptocurrency distributed over many computers. The most known cryptocurrencies are Bitcoin (BTC) which is based on the distributed ledger of the same name and Ether (ETH) which is based on the distributed ledger Ethereum.

Distributed ledgers offer a set of primitives (simple algorithms based on encryption technology) to specify the conditions under which cryptocurrency can be used and transferred. In the most basic settings, a private key is needed to use or transfer the cryptocurrency. The possession of the private key proves thus the ownership of the cryptocurrency similar as the possession of cash. More advanced schemes include multi-signature, where the authorisation by multiple parties is required to validate a transfer. One known multi-signature scheme is a M-by-N primitive. The goal of such a signature scheme is to provide an additional level of security by requiring a minimum number of signatures before authorizing a transaction. Parameter M defines the minimum number of distinct signatures to be submitted by respective signatories to authorize a transaction. Those signatories are known in advance and their total number is represented by the N parameter. A common is a 2-By-3 Escrow Service. Dividing up responsibility amongst a group of signatories is a good approach to achieve better security by avoiding single points of trust, and having M<N allows for resilience in case some of the keys are unavailable, lost or destroyed. Another useful scheme is one where M=N, usually 2-by-2. Such a scheme can be used for a strong two-factor authentication wallet - one private key on a computer and the other one on a smartphone or a portable HSM.

In many contexts though, the flexibility of the ledger primitives is insufficient to enforce certain security policies; in other contexts, the ledger primitives might be sufficient, but the service consumer might want to avoid exposing the security policy explicitly in the distributed ledger, or might want to reduce complexity of the logic in the distributed ledger. In addition, the application of a security policy in the distributed ledger has the disadvantage that it can be delayed or rejected by the distributed ledger for various reasons, leaving room for other transactions to be processed during that time. A further disadvantage is that the security policy is difficult and possibly costly to change, once it is registered in the distributed ledger.

### Brief summary of the invention

It is the object to provide a method, system and/or computer program for validating a transaction of a crypto-asset of a distributed ledger which avoids the above-mentioned drawbacks, in particular which allows for many distributed ledgers to enforce security policies, which keeps the distributed ledger logic simple, which avoids publishing the security policy, which allows simple changing of the security policy, which allows a fast check of the security policy and/or which allows to check in the distributed ledger, if the security policy was checked.

This object is achieved by the method, system and/or computer program for validating a transaction of a crypto-asset of a distributed ledger according to the independent claims.

At least one first level signature of a signatory is combined with at least one second level signature. The at least one first level signature give the authorization by at least one signatory as well known in the state of the art. The second level signature is granted by a hardware security module, if the transaction to be validated fulfils at least one security policy. This system has the advantage that security policy is checked in a trusted environment, i.e. in the hardware security module, such that the check cannot be manipulated by third parties. The security policy is checked off-chain, i.e. outside of the ledger, and can thus be checked quickly and can be easily changed. Nevertheless, the at least one second level signature being published with the first level signatures and the transaction data in the distributed ledger guarantees that the check of the (secret) security policy in the hardware security module is verifiable in the distributed ledger. Thus, this two level signature scheme combines the personal authorization of at least one signatory with the hardware authorization based on at least one security policy. This scheme provides a high security level, a simple and reactive user experience and a compatibility with distributed ledgers with simple primitives.

The dependent claims refer to further advantageous embodiments.

In one embodiment, the transaction data are written such that the distributed ledger will allow the transaction only, if the M first level signatures correspond to M different ones of the N first level keys and/or if the S second level signatures correspond to S, preferably different ones, of the T second level keys. This allows that the security scheme of the crypto-asset is verifiable in the distributed ledger.

In one embodiment, the transaction data comprise explicitly the minimum number M of first level signature and/or the minimum number S of second level signature. This allows that the M-by-N and/or S-by-T scheme is verifiable in the distributed ledger.

In one embodiment, each of the M first level signatures corresponds to a signature information obtained from signing the transaction data on the basis of (a different) one of the N first level keys and/or each of the S second level signatures corresponds to a signature information obtained from signing the transaction data on the basis of (preferably a different) one of the T second level keys.

In one embodiment, the method comprises the step of sending the transaction data from the processing apparatus to N signatories possessing the N private first level key for authorization of the transaction. This has the advantage that the processing apparatus can centrally inform all the N signatories about the transaction.

In one embodiment, the processing apparatus receives from at least M signatories a message with an identification information of the transaction and the first level signature based on the private first level key of the corresponding sending signatory. This allows to group all messages belonging to the same transaction together without the necessity to run a signature checking algorithm in the processing apparatus.

In one embodiment, the processing apparatus sends a message with the transaction data and the M received first level signatures to each of the at least one hardware security module. This allows to provide all hardware security modules with the necessary information for doing the necessary checks before creating the second level signature.

In one embodiment, each of the at least one hardware security module stores one of the T private second level keys, wherein each of at least S of the at least one hardware security module checks, if the transaction details of the transaction data fulfil the at least one security policy and, if the transaction details fulfil the at least one security policy, creates a second level signature based on the private second level key stored in the hardware security module. This has the advantage that each of the at least one hardware security module performs the same check, which provides a redundancy and increases the reliability of the system. In one embodiment, each of at least S of the at least one hardware security module checks additionally on the basis of the transaction data and the public first level keys the correctness of the M first level signatures and, if the transaction details fulfil the at least one security policy and the M first level signatures are correct, creates a second level signature based on the private second level key stored in the hardware security module. It is advantageous to use the at least one hardware security module for checking the signatures, because those operations are power and time consuming. The check of the M first level signatures has the advantage that some problems of the first level signatures can be detected before the transaction is published in the distributed ledger.

In one embodiment, the processing apparatus sends the transaction data, the M first level signatures and the S second level signatures only to the node of the distributed ledger, if the minimum number S of second level signatures are received from the at least one hardware security module.

In one embodiment, the at least one hardware security module comprises at least two hardware security modules. This provides a redundancy and increases the reliability. In addition, it reduces the risk of a hardware attack.

In one embodiment, there are T hardware security modules and each hardware security module stores a different second level private key. This has the advantage that the private second level key can be generated in the hardware security module and must be never exposed outside. This reduces the risk of a malicious third party "stealing" the private second level key.

In one embodiment, if the number T is smaller than the number of hardware security modules, one or more of the T private second level keys can be replicated on more than one hardware security module.

In one embodiment, N is two or bigger. This increases the security, if also multiple signatures of signatories are necessary, and/or increases reliability, if M is smaller than N, as not all signatories must send a signature. One of the signatories could have lost its private first level key or could be absent.

In one embodiment, M is two or bigger. This increases the security as multiple signatures of signatories are necessary.

In one embodiment, M equal to N. This provides for a high security level, as all signatories must send their signatures. The M-by-N and S-by-T scheme becomes a N and S-by-T scheme.

In one embodiment, M is smaller than N. This increases reliability, as not all signatories must send a signature. One of the signatories could have lost its private first level key or could be absent.

In one embodiment, N and M are each one. This allows a solution for simple systems. The M-by-N and S-by-T scheme becomes a 1 and S-by-T scheme.

In one embodiment, the method allows to create a new crypto-asset wallet, wherein, when creating a crypto-asset wallet, N and M can be configured from any natural number with N equal to or larger than M. This allows that the user can decide himself the best M-by-N scheme adapted for his use. This could be a 1-by-1, a 1-by-2, a 2-by-2, a 2-by-3 or any other combination.

In one embodiment, T is two or bigger. This increases the security, if also multiple second level signatures are necessary, and/or increases reliability, if S is smaller than T, as not all hardware security module must send a signature. One of the hardware security module could be shut down, occupied or attacked by a malicious third party.

In one embodiment, S is two or bigger. This increases the security as one of the hardware security modules could be attacked.

In one embodiment, S equal to T. This provides a high security, as all hardware security modules must reply.

In one embodiment, S is smaller than T. This increases reliability as not all hardware security module must send a signature. One of the hardware security module could be shut down, occupied or attacked by a malicious third party.

In one embodiment, S and T are each one. This could be a solution for a simple system.

In one embodiment, the method allows to create a new crypto-asset wallet, wherein, when creating a crypto-asset wallet, S and T can be configured from any natural number with T equal to or larger than S. This allows that the user can decide himself the best S-by-T scheme adapted for his use. This could be a 1-by-1, a 1-by-2, a 2-by-2, a 2-by-3 or any other combination.

### Brief Description of the Drawings

The invention will be better understood with the aid of the description of an embodiment given by way of example and illustrated by the figures, in which:
Fig. 1 shows an embodiment of a system for validating a transaction of a crypto-asset of a distributed ledger.
Fig. 2 shows an embodiment of a method for validating a transaction of a crypto-asset of a distributed ledger.
Fig. 3 shows an alternative illustration of the system and/or method for validating a transaction of a crypto-asset of a distributed ledger.

### Detailed Description of possible embodiments of the Invention

In the following some terms used herein will be defined.

The term "key" refers herein preferably to an asymmetric key comprising a public key and a private key. The private key can be used to create a signature, while the public key can be used to check the correctness of the signature and/or the origin of the data signed with this signature. Some algorithms or signature schemes (for example Schnorr) allow to combine multiple public keys in an aggregate key. The notation of multiple (public) keys should always include the meaning of at least one aggregate (public) key based on the multiple (public) keys or of a multiple individual (public) keys or a mixture thereof. For example, sending multiple keys, receiving multiple keys or validating on the basis of multiple keys could thus mean either sending multiple keys individually, receiving multiple keys individually or validating on the basis of multiple keys individually, respectively, or sending their at least one aggregate key, receiving their at least one aggregate key or validating on the basis of their at least one aggregate key, respectively.

The term "signature" refers herein to a digital signature. The signature is related to data signed by the signature and to a key. The signature confirms that data origin from somebody or something being in the possession of the private key of the key related to the signature and that the data have not be changed during the transmission. The signature is created on the basis of the private key and the data to be signed. The signature can be verified on the basis of the data signed and the public key of the key related to the signature. The data signed by most of the subsequent signatures are the transaction data defined later. Normally, a hash value is calculated for the data to be signed. Then, the signature value is calculated on the basis of the hash value and the private key. However, it is also possible to use other signature methods. Some algorithms or signature schemes (for example Schnorr) allow to combine multiple signatures in an aggregate signature (for example a Schnorr signature). The notation of multiple signatures should always include the meaning of multiple individual signatures and the meaning of at least one aggregate signature based on the multiple signatures or a mixture thereof. For example, sending, receiving or validating multiple signatures could thus mean either sending, receiving or validating, respectively, multiple signatures individually/sequentially or sending, receiving or validating, respectively, their at least one aggregate signature (on the basis of the corresponding aggregate public key).

The term "crypto-asset", also called cryptographic-asset, is used for any asset which is stored in a distributed ledger. The most important crypto-assets are cryptocurrencies like bitcoin, ether, ripple, etc.. More generally, crypto-asset might refer to any token of value stored in a distributed ledger, including digital identities or utility tokens

A "transaction" of a crypto-asset is any change of the crypto-asset which causes a change of the distributed ledger in which the crypto-asset is stored. A transaction is in most cases a transfer from one wallet in another wallet but can also refer to other kind of transactions such as smart-contract interactions.

The term "something validating a transaction" means that the something gives the permission to further process the transaction to be published and registered in the distributed ledger. The below mentioned system according to the invention validates the transaction outside of the distributed ledger before publishing the transaction on the distributed ledger. Then the distributed ledger again validates the transaction before registering the transaction on the distributed ledger. If a transaction is not validated, the further processing of the transaction is stopped or paused until all validation conditions (validation scheme) is fulfilled.

The term "transaction data" shall define the data necessary for the distributed ledger to perform the transaction. The same kind of transaction could have a completely different form for different distributed ledgers. For example, the transaction data are at least partially written in the form of scripts for the bitcoin blockchain. The transaction data comprise preferably the transaction details. The transaction details contain all details necessary for defining the transaction, e.g. address of the crypto-asset in the distributed ledger, the destination of the crypto-asset, if it is transferred, the amount, etc.. The previous list is just exemplary and shall not restrict the invention. It is well known in the state of the art, what information the transaction details must contain. In addition to the transaction details, the transaction data comprise also the authorization details which provide the details necessary for authorizing the transaction. The authorization details comprise normally public keys. The authorization details comprise also the validation scheme. The authorization details of the present invention will be described in more detail below.

An "identification information" of the transaction is an information which identifies the transaction. This could be a transaction id, a hash of the transaction data, the transaction data themselves, or any other identifier for the transaction.

A "cryptocurrency wallet" defines a common security or validation scheme for protecting at least one crypto-asset. One or several crypto-assets can underlie the same cryptocurrency wallet, if its or their transaction(s) can be validated by the same validation scheme with the same set of keys.

A "hardware security module" is a physical computing device that safeguards and manages digital keys for strong authentication, provides cryptographic processing and provides a trusted execution environment for special functions. Preferably, the hardware security module distinguishes to general computing devices first by its computational specialisation on certain functions, while a general computing device can perform any function programmed. Preferably, the hardware security module distinguishes to general computing devices second by its trusted executed environment, which, different to general computing devices, cannot be observed and/or manipulated by third parties.

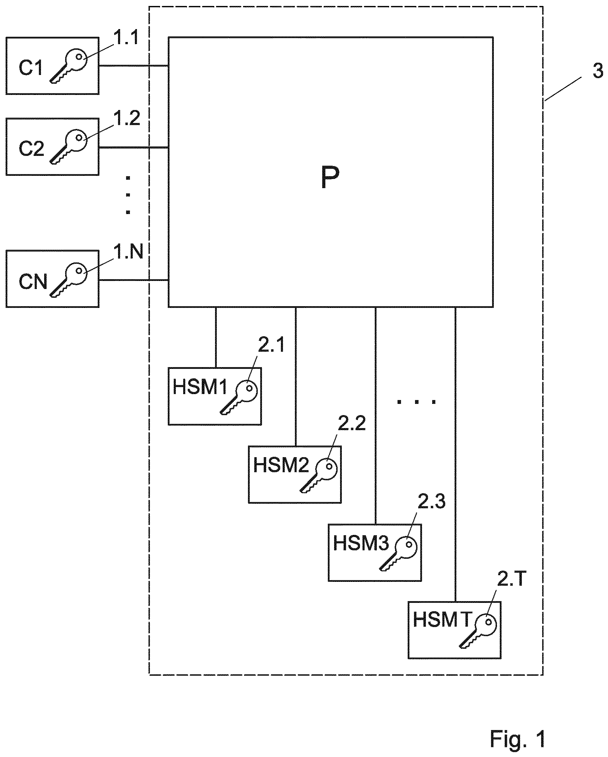

Fig. 1 shows an embodiment of the system 3 for validating a transaction of a crypto-asset of a distributed ledger L.

The system 3 uses N first level keys and T second level keys. Each first level key comprises a public first level key and a private first level key 1. Each second level key comprises a public second level key and a private second level key 2. N can be any natural number, i.e. N can be one, two, three, four, etc.. Preferably, N is two or higher. T can be any natural number, i.e. T can be one, two, three, four, etc.. Preferably, T is two or higher. The plural notion "T or N (private/public) (first/second) level keys" shall not exclude the case T=1 and/or N=1, but should include T=1, 2, 3 or higher and/or N=1, 2, 3 or higher.

The system 3 is preferably configured to create the transaction data D for a transaction of a crypto-asset. The transaction data comprise transaction details with all details about the crypto-asset and the transaction as defined by someone or something requesting this transaction. The transaction data D comprises further the N public first level keys and the T public second level keys and/or the validation scheme applied. The transaction data D comprises the N public first level keys shall mean that the N public first level keys can be contained in the transaction data D individually or as at least one aggregate public first level key. The transaction data D comprises the T public second level keys shall mean that the T public second level keys can be contained in the transaction data D individually or as at least one aggregate public second level key. The transaction data D comprises the N public first level keys and the T public second level keys could in some cases also mean that the N public first level keys and the T public second level keys can be contained in the transaction data D as at least one aggregate public key. The validation scheme will be described in the following. The transaction data D are written such that they can be executed by the distributed ledger L of the crypto-asset underlying the transaction. This means that the transaction data D are written such that the distributed ledger L, when executing the transaction data D, validates the transaction based on the transaction data D and on the accompanying signatures following the validation scheme defined in the transaction data D and, if the validation was successful, registers the transaction or the transaction data D in the distributed ledger L.

The validation scheme is a M-by-N and S-by-T validation scheme, wherein M is the minimum number of first level signatures A of the transaction data D necessary for validating the transaction, and S is the minimum number of second level signatures B of the transaction data D necessary for validating the transaction. M can be any natural number smaller than or equal to N, i.e. M can be one, two, three, four, etc.. In a preferred embodiment, M is two or higher. S can be any natural number smaller than or equal to T, i.e. S can be one, two, three, four, etc.. In a preferred embodiment, S is two or higher. This means that the transaction is only validated, if there are at least M first level signatures A of the (same) transaction data D based on M (different ones) of the N first level keys and if at least S second level signatures B of the (same) transaction data based on S (different ones) of the T second level keys are received (from the at least one HSM). The M-by-N and S-by-T validation scheme shall include also the extreme cases of M=N (N and S-by-T), of S=T (M-by-N and T), of M=N and S=T (N and T), of N=1 (1 and S-by-T), of T=1 (M-by-N and 1), of N=T=1 (1 and 1), of M=1 (1-by-N and S-by-T), of S=1 (M-by-N and 1-by-T) and of S=M=1 (1-by-N and 1-by-T).

The validation of the transaction in the distributed ledger depends according to the invention on two validation stages. A first validation stage in the system 3 and/or outside of the distributed ledger L of the crypto-asset underlying the transaction. This first validation stage checks in particular, if the transaction data D fulfil at least one security policy. Only if the transaction data D fulfil the at least one security policy, the S second level signatures B will be created in the system 3 and the transaction data D are sent with the M first level signatures A and the S second level signatures B to the distributed ledger L for publication in the distributed ledger L. The M first level signatures A and the S second level signatures B could be sent either individually or as at least one aggregate signature based on the M first level signatures A and the S second level signatures B or mixtures thereof. The at least one aggregate signature could for example comprise (at least) one aggregate first level signature based on the M first level signatures A and (at least) one aggregate second level signature B based on the S second level signatures B. A second validation stage is performed in the distributed ledger L as provided in the transaction data D. This second validation stage checks, if the M first level signatures A of the transaction data D correspond to M (different ones) of the N public first level keys contained in the transaction data D and if the S second level signatures B of the transaction data D correspond to S (preferably different ones) of the T public second level keys contained in the transaction data D. The check, if the M first level signatures A of the transaction data D correspond to M (different ones) of the N public first level keys contained in the transaction data D can be performed individually on each of the M first level signatures A (if the M first level signatures A are contained individually in the message(s) to the distributed ledger L) or can be performed on at least one aggregate signature based on the M first level signatures A (if the M first level signatures A are contained in the message(s) to the distributed ledger L in the form of at least one aggregate signature). In the first case, the verification of the M first level signatures A is performed using the respective individual public first level keys contained in the transaction data D. In the second case, the verification of the M first level signatures A is performed using the respective at least one public aggregate first level key contained in the transaction data D on the at least one aggregate signature. The check, if the S second level signatures B of the transaction data D correspond to S (preferably different ones) of the T public second level keys contained in the transaction data D can be performed individually on each of the S second level signatures B (if the S second level signatures B are contained individually in the message(s) to the distributed ledger L) or can be performed on at least one aggregate signature based on the S second level signatures B (if the S second level signatures B are contained in the message(s) to the distributed ledger L in the form of at least one aggregate signature). In the first case, the verification of the S second level signatures B is performed using the respective individual public first level keys contained in the transaction data D. In the second case, the verification of the S second level signatures B is performed using the respective at least one public aggregate second level key contained in the transaction data D on the at least one aggregate signature. The check, if the M first level signatures A of the transaction data D correspond to M (different ones) of the N public first level keys contained in the transaction data D and the check, if the M first level signatures A of the transaction data D correspond to M (different ones) of the N public first level keys contained in the transaction data D can in some cases also be performed also on at least one aggregate signature based on the M first level signatures A and the S second level signatures B (if the M first level signatures A and the S second level signatures B are contained in the message(s) to the distributed ledger L in the form of at least one aggregate signature). If this is fulfilled, i.e. if the check confirms the above question, the distributed ledger L will validate the transaction data D and register the transaction data D in the distributed ledger L. The first validation stage in any case checks that the transaction data D fulfil the at least one security policy and that M first level signatures A of the transaction data and S second level signatures B of the transaction data are present. The second validation stage validates the correctness of the M first level signature A and the S second level signatures B (and does not need to check any of the security policies).

The system 3 comprises a processing apparatus P and at least one hardware security module HSM.

The processing apparatus P is configured to perform the subsequently described functions. The processing apparatus P is preferably a general computing device like a server or a computer. However, the processing apparatus P could be also a system of multiple computing devices and/or a system of distributed computing devices and/or one or more special computing devices configured to perform only the below mentioned functions. Preferably, the processing apparatus P stores the N public first level keys and T public second level keys. The N public first level keys and T public second level keys can be stored individually and/or in the form of at least one public aggregate key, e.g. one public aggregate first level key and on public aggregate second level key.

The at least one HSM stores the T private second level keys 2. In a preferred embodiment, there are at least two HSMs. Preferably, the number of HSMs is larger than or equal than the number T of private second level keys 2. Preferably, each of the T private second level keys 2 is stored on a different HSM. Preferably, each of the HSMs stores a different one of the T private second level keys 2. However, if T is smaller than the number of HSMs or for other reasons, it is also possible to replicate one or more of the private second level keys 2 on multiple HSMs. If T=1 and there are multiple HSMs, the single private second level key is replicated on each of the HSMs. In a preferred embodiment, the number of HSMs corresponds to the number T of private second level keys 2 such that each HSM can store a different one of the T private second level keys 2. It is however also possible that some of the T second level keys are stored as redundant keys outside of the HSMs as a back-up key(s) and/or as a second second level key in one or more of the HSMs. Thus, it is also possible that the number T of second level keys is larger than the number of HSMs. Thus, it is also possible that the number of private second level keys 2 stored in one of the HSMs is two or more (at least one).

Each HSM is configured to create (preferably in its trusted execution environment) a signature B of the transaction data D on the basis of the private second level key 2 stored in the respective HSM. Each HSM provides a trusted execution environment configured to check at least one security policy for transactions to be validated. A security policy is a validation condition which the transaction must fulfil in order to be validated. Preferably, the security policy refers to a condition relevant for the security of the wallet. It is however also possible that the security policy contains (only or some) condition(s) which refer not to the security of the wallet. The following security policies are examples for a security policy:

One embodiment of a security policy could be a transaction flow limit. This security policy could set quotas per unit of time for outgoing transactions on a wallet. Enabling such policy avoids having an attacker to empty the entirety of a wallet in one transaction for example.

One embodiment of a security policy could be an emergency lockdown. Perform fine-tuned, immediate, lockdown of either users (through their public key) or wallets. This even enables the whole system to be locked down by the press of a red button for instance. The validation condition in the at least one HSM would then be the following. If the system 3 is in a lockdown state, do not validate any transaction. If the system 3 is not in a lockdown state, validate the transaction, if all other potentially existing security policies are fulfilled.

One embodiment of a security policy could be a business hour constraint. In this security policy active business hours are defined, causing all transaction requests to fail outside this time period of the defined active business hours.

One embodiment of a security policy could be white-listing and/or black-listing. A company could choose to validate transactions only between specific accounts, for example belonging to the same company, or also to ban certain addresses.

Obviously, many more security policies can be defined. The system could provide predefined security policies which can be selected or deselected by a user or super user. The system could provide the possibility to define own security policies.

Preferably, each HSM is configured to check (preferably in the trusted execution environment) the M first level signatures A of the transaction data D. This can be performed on the basis of the transaction data D and the N public first level keys. The check, if the M first level signatures A of the transaction data D correspond to M (different ones) of the N public first level keys contained in the transaction data D can be performed individually on each of the M first level signatures A (if the M first level signatures A are contained individually in the message(s) to the at least one HSM) or can be performed on at least one aggregate first level signature based on the M first level signatures A (if the M first level signatures A are contained in the message(s) to the at least one HSM in the form of at least one aggregate signature). In the first case, the verification of the M first level signatures A is performed using the respective individual public first level keys contained in the transaction data D. In the second case, the verification of the M first level signatures A is performed using the respective at least one public aggregate first level key contained in the transaction data D on the at least one aggregate first level signature. Only if the M first level signatures A correspond each to the transaction data D and to one, in particular a different one compared to the other M signatures, of the N first level keys, the signature B of the transaction data D based on the private second level key 2 stored in the respective HSM is created and sent to the processing apparatus P.

The system 3, in particular the processing apparatus P, is connected to at least one client device C storing or providing the N private first level keys 1. Each client device C is configured to create at least one first level signature A of the transaction data D on the basis of the at least one private first level key 1 stored or provided on the respective client device C. In the shown embodiment, each of the N private first level keys 1 are stored in N different client devices C such that each client device C1, ..., CN is configured to create a different first level signature A1, ..., AN of the transaction data D. However, it is also possible that some client devices C store two or more private first level keys 1 such that the number of client devices is smaller than the number N of first level keys or that some first level keys are kept outside of devices for backup. In this case, the client devices C with more than one key can create more than one distinct first level signatures A of the transaction data D based on the distinct private first level keys 1 stored in the client device C. One, some or all client devices C are preferably remote from the system 3, in particular from the processing apparatus P. The connection between the client device C is preferably over the internet, over a satellite connection, over a cellular wireless network like in mobile phone networks or over other connections. However, it is also possible that the client device C is arranged in the vicinity of the processing apparatus P and/or connected over a local wireless connection like WLAN, Bluetooth, NFC, LoRa, etc or a wired connection like LAN, USB, etc.. One, some or all of the client devices C could in one embodiment also be integrated in the processing apparatus P. One, some or all client devices C could be part of the system 3 in form of software and/or hardware clients. For example, a special client software of the system 3 could be installed on a device of a signatory for storing the private first level key 2, checking a transaction of a crypto-asset on the basis of transaction data and/or creating a signature of the transaction data on the basis of the private first level key 1 stored in the client software. The client software could be configured to present the transaction details to a signatory for approving the transaction. The device with the client software would then constitute the client device. Obviously, those functions could also be realised by a special hardware client device like a client-HSM or other. If the client devices are realised (all) by a client software or client hardware of the system 3, the security of the wallet can be better controlled. The approval for the transaction in the client device is normally received from a human signatory operating a human-machine-interface. However, it is also possible that the approval for the first level signature A is given by an algorithm performed on the client device C or a client "server" automating the process. This algorithm could for example be set by the signatory related to the private first level key 1 stored in the respective client device C.

Each set of N first level keys, T second level keys, the minimum number M of first level signatures A and the minimum number S of second level signatures B defines one wallet (validation scheme). The system 3 could provide one or several wallets. Two different wallets of the system 3 can use distinct N+T keys for each wallet (all N+T keys are different and maybe also the number of N, T, M and S). It is however also possible, that two wallets share one or more keys of the N+T keys. For example, it could be that the same N signatories have two wallets with different security policies and use the same N first level keys in the two wallets, but two sets of T second level keys. In another example, it is possible that two wallets use two distinct sets of N first level keys, but use the same T second level keys for the validation of the least one security policy. Different wallets can have different number(s) T, N, M and/or S, but could have also the name numbers T, N, M and/or S. Since the system 3 requires at least one HSM, it is considered a hardware cryptocurrency wallet. One wallet could also relate to different crypto-assets belonging to different distributed ledgers L. The function of the wallet is described in the following for one wallet. The function for other wallets is the same.

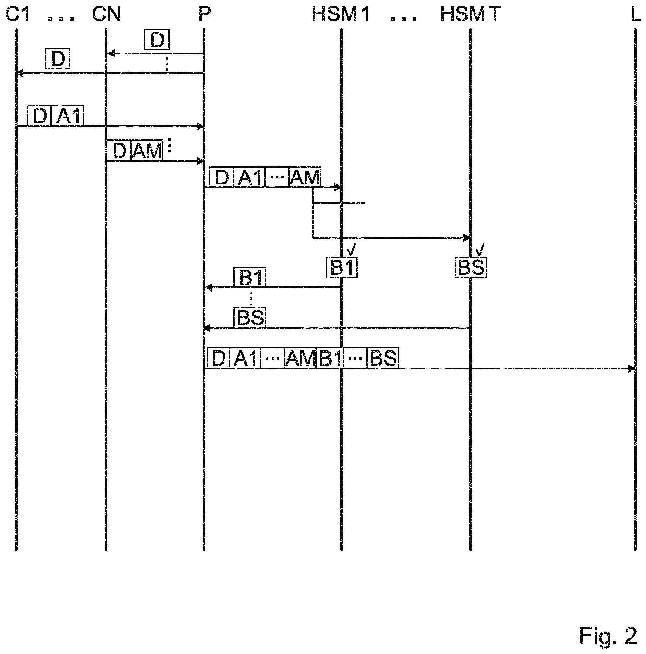

Fig. 2 shows now an embodiment of the method for validating the transaction of the crypto-asset of the distributed ledger in a wallet. It is assumed that there is a crypto-asset registered in a distributed ledger L. The distributed ledger L has registered with this crypto-asset the validation scheme of the wallet, i.e. the N public first level keys (individually or in an aggregate form), the T public second level keys (individually or in an aggregate form) and the M-by-N and S-by-T validation scheme. For validating a transaction of this crypto-asset in the distributed ledger L, the distributed ledger L must receive the transaction data D defining this transaction of the crypto-asset, M first level signatures A (individually or in an aggregate form) of the transaction data D belonging to (M different ones of) the N first level public keys and S second level signatures B (individually or in an aggregate form) of the transaction data D belonging to (preferably S different ones of) the T second level public keys.

The system 3, preferably the processing apparatus P provides transaction data D for a wallet. The transaction data D comprises the transaction details, the N public first level keys (individually or in an aggregate form), T public second level keys (individually or in an aggregate form) and the validation scheme of the wallet. In one embodiment, the wallet and/or the processing apparatus P receives a transaction request. The transaction request comprises the transaction details. The wallet or the processing apparatus P generates the transaction data D on the basis of the transaction details received in the transaction request and on the basis of the N first level keys (individually or in an aggregate form), T second level keys (individually or in an aggregate form) and the validation scheme defined in the wallet or the processing apparatus P. The transaction data D are generated in a language which can be executed or interpreted by the distributed ledger L underlying the crypto-asset. In another embodiment, it is also possible that the transaction data D are not generated in the processing apparatus P or the system 3. The transaction data D provided by the wallet, the system 3 or the processing apparatus 3 can for example be prepared by a client device C, by a signatory or by any third party and be sent to the wallet, the processing apparatus P or the system 3.

The transaction data D are preferably sent from the wallet and/or the processing system P to the N signatories and/or client devices C. This is normally realised by sending the transaction data D to N client devices associated in the processing apparatus P with the N first level keys. Preferably, the transaction data D is sent to client devices C or client software applications of the system 3 storing the private first level keys 1. However, it is also possible to send the transaction data D in another way, e.g. to an email address of a signatory. The transaction data D sent to each client device C are identical. In an alternative (but unlikely) embodiment, the transaction data D are not received from the wallet, the processing apparatus P and/or the system 3, but a third party, one of the signatories or one of the client devices C which sends the transaction data D directly to the signatories and/or client devices.

The N signatories can then check the transaction details received via the transaction data D in the client devices C and approve or disapprove the transaction. Preferably, each client device C is configured to show the transaction details to the signatory of the respective client device C and to approve or disapprove the transaction by the signatory. The approval of the transaction could however also be provided automatically, maybe by an algorithm defined by the signatory. If the transaction is approved, the client device C and/or the signatory creates a signature A of the transaction data D on the basis of the private first level key 1 stored in the client device C and/or at the signatory. This signature A is called first level signature A as it is based on one of the N first level keys. At least the first level signature A is sent back to the wallet, the processing apparatus P and/or the system 3 from the client devices C which approved the transaction. Preferably, the reply message with the first level signature A contains further an identification information of the transaction like the transaction data D, a hash of the transaction data D or any other identifier of the transaction.

The wallet, the processing apparatus P and/or the system 3 receives then the first level signatures A from the signatories and/or client devices C which have authorized the transaction. When the processing apparatus P has received M or more first level signatures A of the transaction data D, it sends the transaction data D to the at least one HSM, preferably to each of the HSMs. Preferably, the wallet or the processing apparatus P sends the transaction data D together with M of the received first level signatures A1, ..., AM of the transaction data D received (individually or in an aggregate form) to each of the at least one HSM. However, this information is optional, since the first level signatures A1, ..., AM must not necessarily be checked in the at least one HSM. The processing apparatus P could also check, if the received first level signatures A1, ..., AM are correct and belong indeed to (M different ones of) the N (public) first level keys (see description of analogue check in the HSM above). However, it is preferred that this check is not performed in the processing apparatus P and/or that this check is performed in the at least one HSM which can perform this quicker, more safely and with less resources. The check, if the received first level signatures A1, ..., AM are correct and belong indeed to (M different ones of) the N (public) first level keys, can be performed sequentially for each of the M first level signatures A1, ..., AM or in aggregate for some or all of the M first level signatures A (e.g. when using Schnorr-signatures). In an alternative embodiment, it is also possible not to check in the system 3 at all, if the received first level signatures A1, ..., AM are correct and belong indeed to (M different ones of) the N (public) first level keys, since this check is performed anyway in the distributed ledger L. However, the check of the M first level signatures A1, ..., AM in the system 3 allows to give the user a quicker feedback, if the checking result would be negative. Thus, the processing apparatus P needs just to count the first level signatures A of the transaction data D received from the signatories and/or client devices C in order to decide, if the transaction data D are further processed in the validation process. If M first level signatures A have been received, the transaction data D are sent to the at least one HSM.

Some, preferably each of the at least one HSMs receive then the transaction data D (from the processing apparatus P). The function of the HSM is described in the following for one HSM. All other HSMs receiving the transaction data D, if there are more than one, work identically.

The HSM checks, if the transaction data D fulfil the at least one security policy of the wallet. If transaction data D fulfil the at least one security policy, the HSM generates or creates a signature B of the transaction data D on the basis of the private second level key 2 stored in the HSM. The signature created on the basis of the private second level key 2 stored in the HSM is called the second level signature B. The second level signature B of the transaction data D is preferably created only on the transaction data D and/or is created on the same basis as the M first level signatures A. However, it is also possible that the second level signature B of the transaction data B is applied on the transaction data B and the M signatures A1, ..., AM. Since the check of the at least one security policy and/or the creation of the second level signature B is performed by the HSM, this can be performed quickly, without the risk of manipulation of third parties, without being observed by any third party and without exposing the private second level key 2 to any risk of being copied. (If transaction data D fulfil the at least one security policy and/or if the HSM generates or creates a second level signature B of the transaction data D,) the generated second level signature B of the HSM is sent back to the processing apparatus P. If the result of the check in the HSM is that the transaction data D do not fulfil the at least one security policy, the HSM does not generate the second level signature B and/or does not sent the second level signature B to the processing apparatus P. In addition, the HSM could send an error message back to the processing apparatus P. This error message could cause the cancellation of the transaction.

Preferably, the HSM checks further, if each of the M first level signatures A1, ..., AM correspond to a signature of the transaction data D signed by one of the N first level keys (by one of the N private first level keys corresponding to the N public first level keys in the transaction data D). Preferably, this includes the check, if the M first level signatures A1, ..., AM correspond (each) to a signature of the transaction data D (thus, if the signatory has indeed authorized the transaction of the transaction data D) and/or if the M first level signatures were each signed by one of the N first level keys, in particular each by a different one of the N first level keys. This is normally done by applying on each first level signature A a signature verification algorithm receiving as inputs the first level signature A, one of the N public first level keys and the data signed (normally the transaction data D). If it is known, which of the N public first level keys should correspond to the first level signature A, the correct public first level key can be selected and the verification algorithm must be performed only once. If this is not known, the verification algorithm must be performed with one public first level key after the other, until the correct one has been found. (see also above for the description of the checking of the M first level signatures A in the HSM). In this embodiment, the HSM creates the second level signature B only and/or sends the second level signature B to the processing apparatus P only, if each of the M first level signatures A1, ..., AM correspond to a signature of the transaction data D signed by one of the N first level keys and if the transaction data D fulfil the at least one security policy of the wallet.

The processing apparatus P and/or wallet collects all the second level signatures B of the transaction data D received from the at least one HSM. If the processing apparatus P and/or the wallet has received S or more second level signatures B from the at least one HSM, the processing apparatus P sends the transaction data D with the M first level signatures A (individually or in an aggregate form) and the S second level signatures B (individually or in an aggregate form) to the distributed ledger L in order to publish and register the transaction. The system 3 and/or the processing apparatus P could optionally check, if the received second level signatures B1, ..., BS are correct and belong indeed to (S different ones of) the T (public) second level keys. However, this check can also be omitted, since the distributed ledger L will perform this check anyway. This check can be performed sequentially for each of the S second level signatures B or in aggregate for some or all of the S second level signatures B (e.g. when using Schnorr signatures). The above description of the S second level signatures B in the distributed ledger L holds equally for the check of the S second level signatures B in the system 3, wallet and/or processing apparatus P.

The described system and method has the advantage that the security policies remain secret and need not to be disclosed in the distributed ledger L. This has the further advantage that the security policy can easily be changed without asking a transaction of the crypto-asset, and that the logic of the security policy on the distributed ledger may remain simple. Nevertheless, the S second level signatures B registered (individually or in an aggregate form) at the distributed ledger L allows to register a proof that the security policies were indeed checked. In addition, this approach allows the check of security policies for simple distributed ledgers L which do not necessarily provide the possibility to check security policies in the distributed ledger L. This approach thus combines the approval by the M signatories with S checks of a security policy of the wallet without the need to register the security policy in the distributed ledger L.

The distributed ledger L receives at one of its nodes the transaction data D, the M first level signatures A (individually or in an aggregate form) and the S second level signatures B (individually or in an aggregate form). The M first level signatures A and/or the S second level signatures B can be combined in one or two or more aggregate signatures (Schnorr signatures). The distributed ledger L verifies the correctness of the M first level signatures A and the correctness of the S second level signatures B. This verification can be performed sequentially for each of the M first level signatures A and/or the S second level signatures or in aggregate for some or all of the M first level signatures A and/or S second level signatures B (e.g. when using Schnorr signatures). If those are all correct, then the distributed ledger L approves the transaction and registers it (when a new block is created including this transaction). As mentioned above each of the M first level signatures A are checked on the basis of the transaction data D and/or the N public first level keys. Analogue to the M first level signatures A, the S second level signatures B are checked on the basis of the transaction data D and/or the T public second level keys.

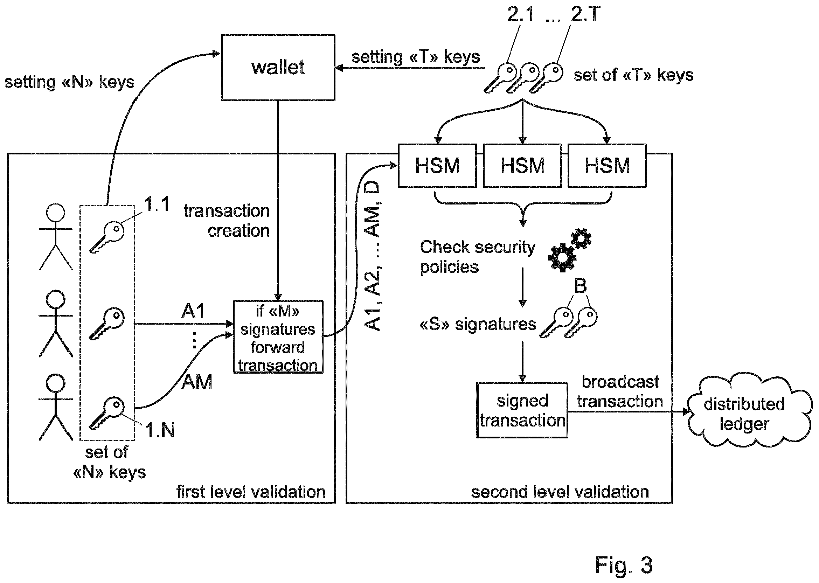

Fig. 3 shows an alternative illustration of the method and/or system for validating a transaction of a crypto-asset.

The described method can also be implemented in a computer program which executes the described steps, when executed on the system 3.

## Claims

1. Method for validating a transaction of a crypto-asset, the method is executed by a processing apparatus (P) and at least one hardware security module (HSM), wherein the method defines N first level keys and T second level keys, wherein each first level key comprises a public first level key and a private first level key (1), wherein each second level key comprises a public second level key and a private second level key (2), wherein the T private second level keys are stored in the at least one hardware security module (HSM), wherein the method comprises the steps of:
providing, in the processing apparatus, transaction data (D) comprising transaction details relating to the transaction of a crypto-asset of a distributed ledger (L), the N public first level keys and the T public second level keys;
receiving a minimum number M of first level signatures (A) from M signatories;
checking, in the at least one hardware security module (HSM), if the transaction details fulfil at least one security policy,
if the transaction details fulfil the at least one security policy, creating, in the at least one hardware security module, a minimum number S of second level signatures (B) based on S of the T private second level keys; and
sending, by the processing apparatus, the transaction data (D), the M first level signatures (A) and the S second level signatures (B) to a node of the distributed ledger (L) to publish the transaction of the crypto-asset in the distributed ledger (L).

2. Method according to the previous claim, wherein the transaction data (D) are written such that the distributed ledger (L) will allow the transaction only, if the M first level signatures (A) correspond to M of the N first level keys and/or if the S second level signatures (B) correspond to S of the T second level keys.

3. Method according to one of the previous claims, wherein the transaction data (D) comprise the validation scheme.

4. Method according to one of the previous claims, wherein N is equal to or larger than two and/or T is equal to or larger than two and/or M is equal to or larger than two and/or S is equal to or larger than two.

5. Method according to one of the previous claims, wherein N and M are each equal to one and/or T and S are each equal to one.

6. Method according to one of the previous claims, wherein M is smaller than N and/or S is smaller than T.

7. Method according to one of the previous claims, wherein each of the M first level signatures (A) corresponds to a signature information obtained from signing the transaction data on the basis of one of the N first level keys and/or each of the S second level signatures (B) corresponds to a signature information obtained from signing the transaction data (D) on the basis of one of the T second level keys.

8. Method according to one of the previous claims comprising the step of sending the transaction data (D) from the processing apparatus to N signatories possessing the N private first level key for authorization of the transaction.

9. Method according to one of the previous claims, wherein the processing apparatus receives from at least M signatories a message with an identification information of the transaction and the first level signature (A) based on the private first level key (1) of the corresponding sending signatory.

10. Method according to one of the previous claims, wherein the processing apparatus (P) sends a message with the transaction data (D) and the M received first level signatures (A) to each of the at least one hardware security module (HSM).

11. Method according to one of the previous claims, wherein each of the at least one hardware security module (HSM) stores one of the T private second level keys (2), wherein each of at least S of the at least one hardware security module (HSM):
checks, if the transaction details of the transaction data (D) fulfil the at least one security policy and,
if the transaction details fulfil the at least one security policy, creates a second level signature (B) based on the private second level key (2) stored in the hardware security module (HSM).

12. Method according to the previous claim, wherein each of at least S of the at least one hardware security module (HSM):
verifies on the basis of the transaction data (D) and the public first level keys the correctness of the M first level signatures (A), and
if the transaction details fulfil the at least one security policy and the M first level signatures (A) are correct, creates a second level signature (B) based on the private second level key (2) stored in the hardware security module (HSM).

13. Method according to one of the previous claims, wherein the processing apparatus (P) sends the transaction data (D), the M first level signatures (A) and the S second level signatures (B) to the node of the distributed ledger, only if the minimum number S of second level signatures (B) are received from the at least one hardware security module (HSM).

14. Method according to one of the previous claims, wherein the at least one hardware security module (HSM) comprises at least two hardware security modules (HSM).

15. Computer program configured to execute the method according to one of the previous claims, when executed on a processing system (3).

16. System for validating a transaction of a crypto-asset, the system comprises a processing apparatus (P) and at least one hardware security module (HSM), wherein the system defines N first level keys and T second level keys, wherein each first level key comprises a public first level key and a private first level key (1), wherein each second level key comprises a public second level key and a private second level key (2), wherein the T private second level keys are stored in the at least one hardware security module (HSM); wherein the processing apparatus (P) is configured to receive a minimum number M of first level signatures (A) from M signatories, wherein each of the first level signatures (A) corresponds to a signature information obtained from signing transaction data on the basis of one of the N first level keys possessed by the sending signatory; wherein the transaction data comprising transaction details relating to the transaction of a crypto-asset of a distributed ledger (L), the N public first level keys and the T public second level keys; wherein the at least one hardware security module is configured to check, if the transaction details fulfil at least one security policy and, if the transaction details fulfil the at least one security policy, to create a minimum number S of second level signatures (B) based on S of the T private second level keys; and the processing apparatus (P) is configured to send the transaction data, the M first level signatures (A) and the S second level signatures (B) to a node of the distributed ledger (L) to publish the transaction of the crypto-asset in the distributed ledger (L).
